# EUROPEAN PATENT APPLICATION

(11) **EP 3 432 402 A1**
(43) Date of publication of application: **23.01.2019**
(21) Application number: 17275111.7
(22) Date of filing: 18.07.2017
(51) Int. Cl.: H01M 8/18, H01M 8/20, H01M 8/0444, H01M 8/04492

(54) **METHOD FOR OPERATING AT LEAST ONE ELECTRICAL ENERGY STORAGE DEVICE AND ELECTRICAL ENERGY STORAGE DEVICE**

(71) Applicant: Siemens Aktiengesellschaft, 80333 München (DE)
(72) Inventor: FLECK, Robert, 91325 Adelsdorf (DE); FRIEDL, Jochen, NE3 3NJ Newcastle upon Tyne (GB); HUGHES, Timothy, OX12 7AU Wantage (GB); SCHRICKER, Barbara, 91058 Erlangen (DE); STIMMING, Ulrich, NE15 9JT Newcastle upon Tyne (GB); WOLFSCHMIDT, Holger, 91058 Erlangen (DE)

(57) **Abstract**

The invention relates to a method for operating at least one electrical energy storage device and an electrical energy storage device comprising at least one electrochemical cell (12) containing at least one electrolyte (18, 20) and a determination module (26, 28) configured to determine, at at least one test point (22, 24) of the storage device (10), at least one measurement being at least one of a pH-value, a water content and an oxygen concentration of the electrolyte (18, 20) and an operating module (30) configured to operate the storage device (10) on the basis of the measurement.

## Description

The invention relates to a method for operating at least one electrical energy storage device. The invention further relates to an electrical energy storage device.

Electrical energy storage devices often comprise at least one electrochemical cell which is often filled with or contains at least one electrolyte, particularly in a so-called flow battery or redox flow battery. The electrolyte is conventionally dissolved in a liquid or rather a solution or is itself a solution. The electrolyte exhibits molecules, which provide a capacity for an electric charge of the storage device.

If the storage device is a redox flow battery, it is a type of an electrochemical cell, wherein chemical energy is provided by two chemical components, two electrolytes, which are dissolved in at least one liquid each, contained within the system and separated by a membrane. One of the electrolytes is an anolyte and the other one is a catholyte. Ion exchange occurs through the membrane while both liquids, particularly electrolytes, circulate in their own respective space, which is accompanied by a flow of electric current.

A redox flow battery may be used like a fuel cell or like a rechargeable battery. While it has technical advances over a conventional rechargeable battery, such as potentially separable liquid tanks, particularly electrolyte tanks, and near unlimited longevity, current implementations are comparatively less.

The energy capacity is a function of the electrolyte volume and the power is a function of the surface area of electrodes.

To ensure a consistent operation of such an electrical energy storage device, one should be clear about the states of such a storage device. For example, if one of the electrolytes is comprising at least one polyoxometalate, experiments have shown, that the pH-value and the oxygen concentration of the electrolyte each on its own has influence on the operation of the storage device. This can take influence on the capacity and the cell voltage of the storage device. Furthermore, some other cell chemistries using a solvent with neutral or slightly acidic/alkaline pH have found, wherein, with respect to such other cell chemistries, the pH-value and the oxygen concentration can have an impact on the operation of the storage device, too.

It is best practice in prior art that maintenance cycles for storage devices, for example redox flow batteries, so far included constant potential periods to rebalance the state-of-charge of anolyte and catholyte. The chemistry of the electrolytes has not been adjusted yet.

It is an object of the present invention to provide a method and an electrical energy storage device so that a particularly advantageous operation of the storage device can be realized.

This object is solved by a method having the features of patent claim 1 and by an electrical energy storage device having the features of patent claim 8. Advantageous embodiments with expedient developments of the invention are indicated in the other patent claims.

A first aspect of the invention relates to a method for operating an electrical energy storage device in which the storage device comprises at least one electrochemical cell containing at least one electrolyte. The electrolyte is, for example, dissolved in a liquid or rather a solution or is itself a solution. In other words, the electrolyte consists of molecules that can produce an electrically conducting solution when dissolved for example in a water-based solvent.

In order to be able to operate the electrical energy storage device particularly advantageously, the method has the following steps:
In a first one of the steps, at least one measurement being at least one of a pH-value, a water content and an oxygen concentration at at least one test point of the storage device is determined. In a second one of the steps the storage device is operated on the basis of the measurement.

In other words, at at least one test point which is located in the storage device, for example in a tank for one of the at least one electrolyte, at least one measurement is carried out. By means of the measurement at least one value of the pH-value of the electrolyte and/or at least one value of the oxygen concentration of the electrolyte and/or at least one value of the water content of the electrolyte is determined. The electric energy storage device is run depending on the at least one value being a result of the at least one measurement.

In an advantageous embodiment of the invention, it is determined whether or not the measurement deviates from at least one setpoint value. In other words, it is checked if the at least one measurement being at least one of the pH-value and the oxygen concentration of the electrolyte differs from a respective predeterminable or predetermined setpoint value. This results in the advantage that the operation of the storage device is gradual possible.

In an advantageous embodiment of the invention, at least one of an acid, a base and a buffer solution is added to the electrolyte so as to at least reduce the deviation if the measurement deviates from the setpoint value. In other words, if the measured pH-value has not the value of the given setpoint but varies, particularly in a defined interval from the setpoint value, a maintenance cycle is initiated, in which acid and/or base and/or buffer solution is added to the electrolyte solution. This results in the advantage that after adding the acid and/or base and/or buffer solution the pH-value of the electrolyte can reach the given setpoint again.

In the prior art a maintenance cycle only rebalances the electrolyte. Damaged molecules of the electrolyte cannot be repaired by the methods of the prior art. By means of the method according to the present invention, especially by means of the just mentioned maintenance cycle to adjust the pH-value, a self-healing of the molecules of the electrolyte can be induced. In other words, by adding acid or base or buffer solution to the electrolyte, the molecules, especially the redox-molecules and/or polyoxometalate, in the electrolyte are repaired.

In an advantageous embodiment of the invention, at least one of nitrogen and argon is added to the electrolyte so as to at least reduce the deviation if the measurement deviates from the setpoint value. In other words, if the measured oxygen concentration has not the value of the given setpoint but varies, particularly in defined interval from the oxygen concentration setpoint value, nitrogen and/or oxygen is added to the electrolyte solution. If the determination of the oxygen concentration provides a value which is not at a setpoint a maintenance cycle is initiated in which nitrogen or argon is added to the electrolyte, particularly the electrolytic solution, so as to, after adding the nitrogen and/or argon, the oxygen concentration at least reduce the deviation of the real oxygen concentration and the setpoint value of the oxygen concentration or goes back to the given setpoint value again.

In an advantageous embodiment of the invention, by means of the method according to the present invention the storage device can be automatically switched off if the deviation of either the pH-value and/or the oxygen concentration exceeds a threshold value. There can be an upper threshold value and a lower threshold value for each of the pH-value and the oxygen concentration. For example if the pH-value is below 0.8 or above 5.2 the storage device can be automatically switched off. This is a safeguard for preventing a damage of the storage device, particularly of its at least one electrochemical cell. Within the interval from 0.8 to 5.2 of the pH-value acid and/or base and/or buffer solution can be added to the electrolyte, as described above. For the oxygen concentration an upper value for the threshold can be 0.5% above which the storage device is automatically switched off. Nitrogen and/or argon can be added, as described above, to the electrolyte, especially the electrolyte solution, if for example the value of the oxygen concentration is above 0.1% and below 0.5%. A high oxygen content or concentration might not damage the cell, but a high oxygen content may lead to self-discharge, independent of whether or not the storage device is in operation.

In an advantageous embodiment of the invention, the electrical energy storage device is a water-based or non-water-based flow battery. In other words the components of the storage device for example the at least one electrochemical cell and the at least one electrolyte are forming a flow battery or a so-called redox flow battery. This results in the advantage, that the flow battery can be operated efficiently with the inventively method. If, for example, the storage device is configured as a non-water-based flow battery, i.e. a non-aqueous flow battery, detection of the water content and/or the oxygen concentration of the electrolyte is advantageous rather than determining the pH-value.

In an advantageous embodiment of the invention, the electrolyte is metal-based or non-metal-based and/or organic and/or hybrid. With the electrolyte or rather at least a part of its molecules are of at least one of the referred type, the electrolyte can provide good capacity for storing electrical energy in the storage device. For example the polyoxometalate [PV₁₄O₄₂]⁹⁻ is a chemical complex which is a good electrolyte for the storage device especially if it is composed as a flow battery. [PV₁₄O₄₂]⁹ can be used as a catholyte. The catholyte is the portion of an electrolyte, which is near a cathode of the electrochemical cell. As an anolyte, which is the portion of an electrolyte near an anode, [SiW₁₂O₄₀]⁴⁻ can be used.

A second aspect of the invention relates to an electrical energy storage device for storing electrical energy. The storage device comprises at least one electrochemical cell containing at least one electrolyte. To operate the storage device particularly advantageous it therefore comprises a determination module configured to determine, at at least one test point of the storage device, at least one measurement being at least one of a pH-value, a water content and an oxygen concentration of the electrolyte. Furthermore an operating module is configured to operate the storage device on the basis of the measurement. In other words, the storage device comprises components, for example the determination module and the control module so that it can be operated according to the method described above, which is especially efficient in keeping the capacity of the storage device high.

In an advantageous embodiment of the invention, the storage device comprises at least one container for at least one fluid being at least one of nitrogen, argon, an acid, a base and a buffer solution. In other words, the storage device has a container which can be formed as a tank in which the fluid can be stored. This results in the advantage that by the container the at least one element or said fluid, for example nitrogen or acid, can be stored directly in the storage device itself, so that if the pH-value and/or the oxygen concentration has to be regulated the fluid needed is directly available.

In an advantageous embodiment of the invention, the container comprises at least one outlet for introducing the fluid into the electrolyte. In other words, an opening is formed by the outlet or the outlet has an opening which can be regulated, so that when the outlet is in an open state the fluid can flow into the electrolyte and can reduce the deviation between the at least one measured value of at least one of the pH-value and the oxygen concentration and the setpoint value. This results in the advantage that deviation can be kept small, so as to an operation of the storage device with the electrolyte providing a good capacity is possible.

In an advantageous embodiment of the invention, the storage device is a water-based or non-water-based flow battery or so-called redox flow battery.

In another advantageous embodiment of the invention, the electrolyte of the storage device method based or non-metal-based and/or organic and/or hybrid.

Advantages and advantageous embodiments of the first aspect of the invention are to be seen as advantages and advantageous embodiments of the second aspect of the invention and vice versa.

By means of the method according to the invention as well as by means of the storage device according to the invention a permanent control of the pH-value and/or the oxygen concentration and adjustments during the operation of the storage device are possible. For example, a pH-electrode measures the pH-value in the tank of the electrolyte. Information gained thereby can be compared to a look-up table containing specifications for nominal pH-ranges at various states of charge of the storage device. If the measured pH-values is outside of the nominal pH-range then either acid or base or buffer solution are automatically titrated into the tank. The containers or rather the tanks which contain at least one of the nitrogen and oxygen and acid and base and buffer solution can be periodically refilled by a service technician.

Furthermore, by determining, at at least one test point of the storage device, at least one measurement being at least one of a pH-value and an oxygen concentration of the electrolyte, for example, a forecast can be made concerning at least one of a rest capacity, an efficiency and a voltage of the storage device. On the basis of the forecast the operation of the storage device can be adjusted, particularly by the operating module. By means of the initiation of the maintenance cycle, that means adding at least one of nitrogen and oxygen and acid and base and buffer solution to the at least one electrolyte, the storage device can get prepared for example also for unloading or boost charging or increasing the electric potential.

Exemplary embodiments of the invention are explained in more detail below with reference to schematic drawings.

The figure shows in:
- FIG 1: a schematic view of an embodiment of a storage device according to the present invention, which capable of being operated by or perform a method according to the present invention;
- FIG 2: a schematic detailed view of a tank for an electrolyte of the storage device according to FIG 1;
- FIG 3: an overview of a test setup of the storage device via which experiments have been realized to determine a deviation from at least one setpoint value;
- FIG 4: a diagram which provides a trend of NMR-spectra of the electrolyte over time; and
- FIG 5: chemical structure models of two examples of the electrolyte.

In the figures, elements which are functionally equivalent are each provided with the same reference signs.

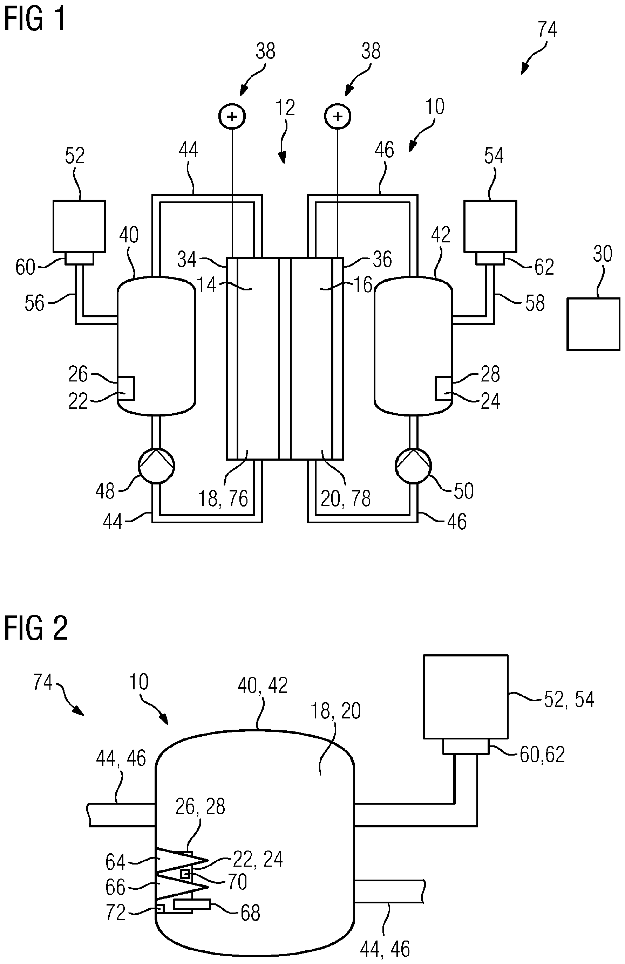

FIG 1 shows a schematic view of an electrical energy storage device 10 for storing electrical energy. The storage device 10 comprises an electrochemical cell 12, the electrochemical cell 12 comprising two half-cells 14 and 16. Each half-cell 14 and 16 comprises or rather is filled with an electrolyte each 18 and 20.

The storage device 10 is constructed in such a way that it can be operated by or perform a method which allows a determination, at at least one test point 22 and/or 24, of at least one measurement being at least one of a pH-value and an oxygen concentration of the electrolyte 18 and/or 20. Depending on a result of the measurement an especially efficient operation of the storage device 10 is possible, the result being, for example, at least one value characterizing the determined pH-value and/or oxygen concentration. Therefore, the storage device 10 comprises determination modules 26 and 28, wherein each determination module 26 and 28 is placed at the test point 22 and 24 respectively. An operating module 30 is configured to operate the storage device 10 on basis of the measurement. The operating module 30 can be designed as an electronic calculation device for example.

During operation of the storage device 10 molecules, which are responsible for the capacity, in the electrolyte 18 and/or 20 might change due to a changing pH-value. This may lead to a reduction of the capacity and/or a cell voltage of the electrochemical cell 12 of the storage device 10. The method provided as well as the storage device 10 can prevent this by manipulating the electrolyte 18 and/or 20.

The storage device 10 is designed as a flow battery or so-called redox flow battery. In the flow battery the electrolyte 18 and 20 comprises one or more of a kind of electroactive elements or molecules which are shown in detail below. While the electrolyte 18 and 20 are flowing through the electrochemical cell 12, chemical energy is transformed to electricity or rather electrical energy. Therefore a membrane 32 divides the electrochemical cell 12 into the two half-cells 14 and 16. Through the membrane 32 ions, particularly of the molecules of each electrolyte 18 and 20, can pass from one half-cell 14 or 16 to the other half-cell 16 or 14 or vice versa. Each half-cell 14 and 16 comprises an electrode each, of which one is designed as a cathode 34 and the other as an anode 36. With this electrodes an electrical current flow is possible, so as to an electric voltage can be tapped at the contacts 38. The contacts 38 can also be used to charge the storage device 10.

Each of the electrolyte 18 and 20 is stored in a tank 40 and 42 respectively. The tank 40 is connected via a pipe 44 with the half-cell 14. In one part of the pipe 44 a pump 48 is installed, with which the electrolyte 18 can be pumped from the tank 42 into the half-cell 14. In other words, with the pump 48 a flow of the electrolyte 18 through a, particularly closed, circle which is formed by the pipe 44 the tank 40 and the half-cell 14 is possible. The tank 42 is connected via the pipe 46 with the half-cell 16. A pump 50 which can cause the electrolyte 22 flow from the tank 42 of the half-cell 16 and back via the circle which is built by the pipe 46 the tank 42 and the half-cell 16.

Containers 52 and 54 are each connected to the tank 40 and 42 respectively via the pipes 56 and 58 respectively. The container 52 comprises an outlet 60, while the container 54 comprises an outlet 62. The containers are built to keep at least one fluid each being at least one of nitrogen, argon, an acid, a base and a buffer solution. With each of the outlets 60 and 62 a flow of the fluid into the tanks 40 and 42 via the pipes 56 and 58 respectively can be controlled. Each flow may be regulated by the operating module 30.

FIG 2 shows a schematic detailed view of the tank 40, 42 for the electrolyte 18, 20 of the embodiment of the storage device 10 corresponding to FIG 1. The tank 40, 42 comprises the test point 22, 24 at which the determination module 26, 28 is placed. Each of the determination modules 26 and 28 can comprise an acid dosimeter 64 and a base dosimeter 66 as well as a pH-electrode 68, which each of it can be used to deter mine the pH-value of the electrolyte 18, 20 in 14, 42. Furthermore the determination module 26, 28 comprises an oxygen analyzer 70 with which the oxygen concentration of the electrolyte 18, 20 can be measured. A connector 72 connects the determination module 26, 28 to the operating module 30, so that the operating module 30 can receive the results of the measurements.

The test point 22, 24 can be, instead of being located at or rather in the tank 40, 42, located in one of the half-cells 14 and/or 16 or in the pipe 44, 46 or in a space 74 in which the storage device is operated. Putting the determination unit 26, 28 in the space 74 surrounding the storage device 10 it is more practicable when only the oxygen analyzer 70 to measure the oxygen concentration is placed in the space 74, because oxygen can leaf the electrolyte 18, 20. The pH-value should be measured within the electrolyte 18, 20.

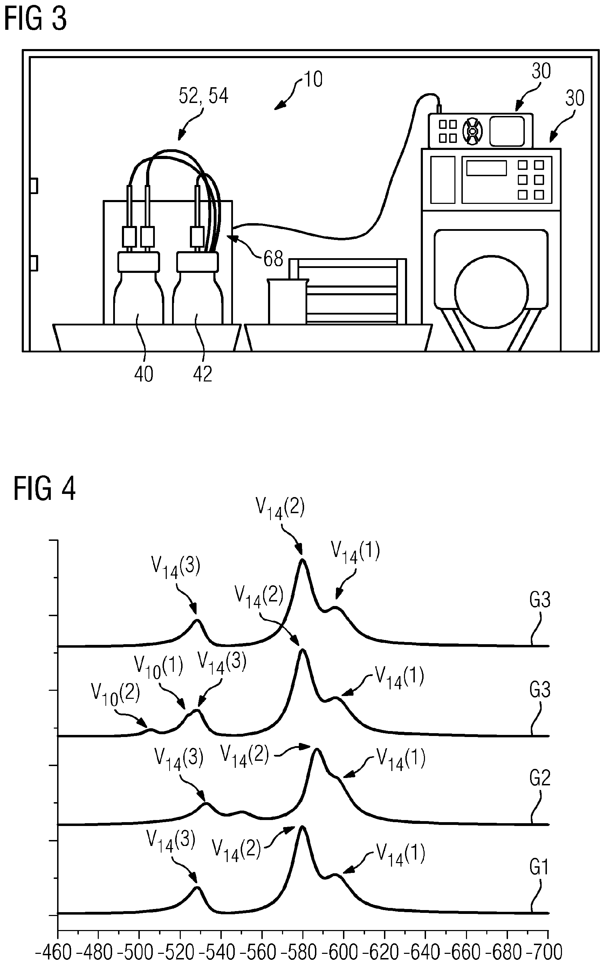

FIG 3 shows an overview of a test setup of an execution example of the storage device 10 via which experiments have been realized to determine a deviation from at least one setpoint value. The storage device 10 shown here is of the type of a flow battery as the storage device 10 of FIG 1 and FIG 2. With this storage device 10 experiments have been performed, which showed the influence of the pH-value of the electrolyte 18, 22 on the capacity of the electrolyte 18, 20 and therefore of the storage device 10. Also experiments were performed which shows the influence of the oxygen concentration to the cell voltage and the capacity of the storage device 10.

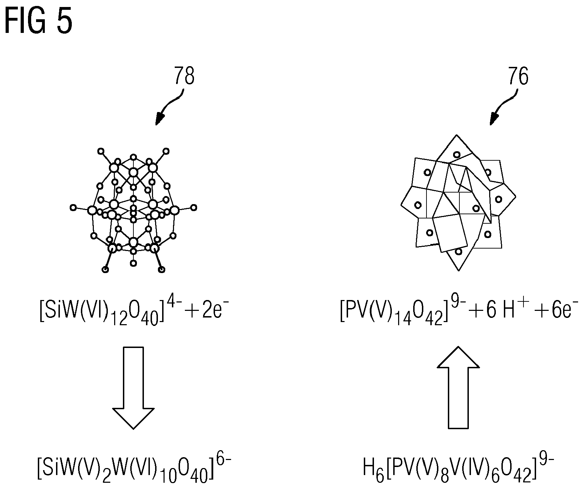

These experiments performed lead to the invention of the method and the storage device 10. Because the showed, that for an electrolyte 18, 20 the capacity and the cell voltage depend on the pH-value of the electrolyte 18, 20 as well as on the oxygen concentration, particularly where the electrolyte 18 is a catholyte 76 whose chemical structure is shown in FIG5 and the electrolyte 20 is an anolyte 78 also shown in FIG 5. The catholyte 76 at the anolyte 78 are of the type of a polyoxometalate each.

The pH-value and the oxygen concentration have a noticeable influence on the operation of the storage device 10. The experiments have shown, that loss of capacity occurs if the oxygen concentration arises. A reduction of the oxygen concentration doesn't lead to a loss of even more capacity, but leads to a stabilization of the available capacity of the storage device 10. An oxygen concentration below 0.1% is desirable for a good operation and capacity and current of the storage device. The oxygen concentration should stay below 0.5% to keep the storage device 10 in an operation mode. If the oxygen concentration is higher than 0.5% an automatically switch off of the storage device should be performed, which can be initiated by the operating module 30. The setpoint value for the oxygen concentration could therefore be set to 0.1%, when the oxygen concentration rises above this setpoint nitrogen and/or oxygen can be introduced into the storage device, particularly the electrochemical cell 12, or the tanks 40 and/or 42. The nitrogen and/or oxygen is therefore hold available in one or each of the containers 52 and/or 54.

The electrolyte 18, 20 or rather catholyte 76 and the anolyte 78 can build so called chemical species within the solution which is part of the electrolyte 18, 20. If the active species is deactivated due to a rise in the oxygen concentration adding hydrazine instead of nitrogen or argon could also be possible.

The experiments showed that a too low and/or a too high pH-value can lead to a coagulation of either the catholyte 76 on the anolyte 78 within the electrolyte 18 and 20 respectively. The coagulation can lead to deposits of the coagulated catholyte 76 and/or anolyte 78 within the electrochemical cell 12, the pipes 44, 46 and the tanks 40, 42 and/or the pumps 48, 50. Coagulation can destroy the storage device 10 and an increase or decrease of the pH-value goes along with a reduction of the capacity of the storage device 10. The pH-value should not decrease below one and/or rise above five. The best operating value for operating the storage device 10 with the shown catholyte 76 and the anolyte 78 is at the pH-value between two and three and especially a pH-value of 2.3. So the setpoint for the pH-value in the shown example should be set to 2.3.

Below a value of 0.8 or higher than 5.2 the storage device should be automatically switched off, which can be performed by the operating module 30. In between the just mentioned pH-values, depending if the value measured is below 2.3 or above 2.3 a base or an acid can be added to the electrolyte 18, 20 respectively. If the measurement of the pH-value deviates from the setpoint in any direction it is possible to add the buffer solution.

It depends on how the storage device should be operated if there is base or acid or buffer solution in the container 52 and/or 54. The other container 54 or 52 can be filled with nitrogen or argon. Any combinations of base or acid or buffer solution or nitrogen or oxygen to fill the containers 52 and 54 are possible. The outlets 60 and 62 of the containers 52 and 54 respectively can be controlled by the operating module 30 in accordance to the measurements of the determination module 26 and/or 28. The acid can be H₂SO₄ or HCl for example the base can be NaOH.

FIG 4 shows a diagram which provides a trend of NMR-spectra of the catholyte 76 over time. The horizontal axis of the diagram shows a chemical shift, whose unity is ppm. The vertical axis shows a relative peak intensity. It shows that the pH-value of the catholyte 76 influences the molecular form in which the vanadium originally of the [PV₁₄O₄₂]⁹ is present in the storage device's 10 catholyte 76. At a pH-value of 2.3 only three peaks (corresponding to the desired molecule [PV₁₄O₄₂]⁹) are present, which is displayed via a graph G1. At pH-values that are lower than 2.3 (for example 0.55) the vanadium is partly present as VO²⁺ which is undesired, which is displayed via a graph G2. Adjustment of the pH-value to 2.3 and waiting for 24 hours leads to an catholyte 76 that entirely consists of the desired molecules again, which is displayed via a graph G4. A graph G3 shows the processing after 2 hours after readjusting the pH-value. Comparison of the graphs G1 and G4 shows, that after 24 hours the catholyte 76 is back in its original state. The peaks shows in the graphs G1-G4 represent the vanadium, a different peak position points to a different oxidation state of the vanadium.

FIG 5 shows chemical structure models of two examples of the electrolyte 18, 20, respectively the catholyte 76 and anolyte 78. As it has been show in the previous text, through the measurement of at least one of the pH-value and the oxygen concentration of the electrolyte conclusions can made for operating the storage device. Through the usage of polyoxometalate as a metal-based electrolyte 18, 20 the pH-value can shift while the storage device 10 is being charged, this is due to the fact that protons are involved in the reactions while charging.

The anolyte 78 is [SiW₁₂O₄₀]⁴ which reacts while charring with two electrons:

[SiW^{VI}₁₂O₄₀]⁴⁻ + 2 e- -> [SiW^{V}₂W^{VI}₁₀O₄₀]6⁻

The anolyte 78 is stable and fully oxidized as [SiW^{VI}₁₂O₄₀]⁴⁻. The catholyte 76 is [PV₁₄O₄₂]⁹⁻ is stable and fully oxidized as [PV^{V}₁₄O_{42]}⁹⁻. While charging the reactions is:

H₆[PV^{V}₈V^{IV}₆O₄₂]⁹⁻ -> [PV₁₄O₄₂]^{9- +} 6 H⁺ + 6 e⁻

The H₆[PV^{V}₈V^{IV}₆O₄₂]⁹⁻ is sensitive to oxygen.

Through conclusions whose are gained by the determination of, at at least one test point 22, 24 of the storage device 10, at least one measurement being at least one of a pH-value and an oxygen concentration of the electrolyte 18, 20 the operation of the storage device 10 can be adjusted. A good range of the pH-value for the just mentioned molecules is between 1 and 5, better between 2 and 4. The oxygen concentration should be below 0.5%, better is a value below 0.1%. The just mentioned pH-values and oxygen concentration are for the shown embodiment and may vary for another embodiment with for example another electrolyte.

## Claims

1. A method for operating at least one electrical energy storage device (10) comprising at least one electrochemical cell (12) containing at least one electrolyte (18, 20), **characterized by**:
- determining, at at least one test point (22, 24) of the storage device (10), at least one measurement being at least one of a pH-value, a water content and an oxygen concentration of the electrolyte (18, 20); and
- operating the storage device (10) on the basis of the measurement.

2. The method according to claim 1,
**characterized by**
determining whether or not the measurement deviates from at least one setpoint value.

3. The method according to claim 2,
**characterized by**
adding, to the electrolyte (18, 20), at least one of an acid, a base and a buffer solution, so as to at least reduce the deviation if the measurement deviates from the setpoint value.

4. The method according to claim 2 or 3,
**characterized by**
adding, to the electrolyte (18, 20), at least one of nitrogen and argon so as to at least reduce the deviation if the measurement deviates from the setpoint value.

5. The method according to one of claims 2 to 3, **characterized by**
automatically switching off the storage device (10) if the deviation exceeds a threshold value.

6. The method according to one of the preceding claims, **characterized in that**
the storage device (10) is a water-based or non-water-based flow battery.

7. The method according to one of the preceding claims, **characterized in that**
the electrolyte (18, 20) is metal-based or non-metal-based and/or organic and/or hybrid.

8. An electrical energy storage device (10) for storing electrical energy, the storage device comprising at least one electrochemical cell (12) containing at least one electrolyte (18, 20),
**characterized by**
- a determination module (26, 28) configured to determine, at at least one test point (22, 24) of the storage device (10), at least one measurement being at least one of a pH-value, a water content and an oxygen concentration of the electrolyte (18, 20); and
- an operating module (30) configured to operate the storage device (10) on the basis of the measurement.

9. The electrical energy storage device (10) according to claim 8,
**characterized by**
at least one container (52, 54) for at least one fluid being at least one of nitrogen, argon, an acid, a base and a buffer solution.

10. The electrical energy storage device (10) according to claim 9,
**characterized in that**
the container (52, 54) comprises at least one outlet (60, 62) for introducing the fluid into the electrolyte (18, 20).

11. The electrical energy storage device (10) according to claim 9 or 10,
**characterized in that**
the storage device (10) is a water-based or non-water-based flow battery.

12. The electrical energy storage device (10) according to claims 9 to 11,
**characterized in that**
the electrolyte (18, 20) is metal-based or non-metal-based and/or organic and/or hybrid.
